# FASCICULE DE BREVET EUROPEEN

(11) **EP 3 990 263 B1**
(45) Date de publication et mention de la délivrance du brevet: **17.06.2026**
(21) Numéro de dépôt: 20785777.2
(22) Date de dépôt: 18.06.2020
(51) Int. Cl.: B29C 70/24, B29C 70/32, B29C 70/88, B29C 70/08, F01D 25/24, B29K 105/16

(54) **PIÈCE DE RÉVOLUTION EN MATÉRIAU COMPOSITE AYANT UNE RÉSISTANCE AU DÉLAMINAGE AMÉLIORÉE**
ROTATIONSTEIL AUS VERBUNDWERKSTOFF MIT VERBESSERTER DELAMINIERUNGSBESTÄNDIGKEIT
COMPONENT OF REVOLUTION MADE OF COMPOSITE MATERIAL HAVING IMPROVED RESISTANCE TO DELAMINATION

(30) Priorité: 27.06.2019 FR 1907019
(43) Date de publication de la demande: 04.05.2022
(73) Titulaire: SAFRAN AIRCRAFT ENGINES, 75015 Paris (FR)
(72) Inventeur: FROMONTEIL, Didier, 77550 Moissy-Cramayel (FR); BAROUMES, Laurent, Jean, Baptiste, 77550 Moissy-Cramayel (FR); GRELIN, Hervé, 77550 Moissy-Cramayel (FR)
(74) Mandataire: Cabinet Beau de Loménie
(86) Numéro de dépôt international: PCT/FR2020/051059
(87) Numéro de publication internationale: WO 2020/260804

(56) Documents cités:
- US-A1- 2007 128 960
- US-A1- 2019 153 876
- US-B2- 8 322 971

## Description

### Domaine Technique

La présente invention se rapporte au domaine général de la fabrication de pièces de révolution telles que des carters de turbine à gaz.

### Technique antérieure

Dans le domaine aéronautique, on cherche à réduire la masse des composants des moteurs tout en maintenant à un haut niveau leurs propriétés mécaniques. Par exemple, dans une turbomachine aéronautique, le carter de soufflante définissant le contour de la veine d'entrée d'air du moteur et à l'intérieur duquel est logé le rotor supportant les aubes de la soufflante est maintenant réalisé en matériau composite.

La fabrication d'un carter de soufflante en matériau composite débute par la mise en place par enroulement d'un renfort en fibres sur un mandrin dont le profil épouse celui du carter à réaliser. Le renfort fibreux peut être réalisé, par exemple, par tissage tridimensionnel (3D) ou multicouche comme cela est décrit dans le brevet US 8 322 971. Ce renfort fibreux constitue une préforme fibreuse tubulaire formant une seule pièce avec des flasques correspondant aux brides du carter. La fabrication se poursuit par la densification de la préforme fibreuse par une matrice polymère qui consiste à imprégner la préforme par une résine et à polymériser cette dernière pour obtenir la pièce finale.

Le tissage tridimensionnel ou multicouche permet de réaliser des renforts fibreux présentant une très bonne résistance mécanique en particulier face au délaminage. En revanche, dans le cas d'un renfort fibreux obtenu par enroulement d'une bande tissée 3D ou multicouche, le renfort fibreux présente une faiblesse à l'interface entre les tours d'enroulement adjacents car il n'y pas de liaison en sens Z dans cette zone.

Il existe, par conséquent, un besoin pour renforcer la résistance au délaminage des pièces de révolution en matériau composite.

### Exposé de l'invention

A cet effet, selon l'invention, il est proposé, selon la revendication 1, un procédé de fabrication d'une pièce de révolution en matériau composite comprenant:
- la réalisation par tissage tridimensionnel ou multicouche d'une texture fibreuse sous forme d'une bande,
- l'enroulement de la texture fibreuse sur plusieurs tours superposés sur un mandrin de profil correspondant à celui de la pièce à fabriquer de manière à former une préforme fibreuse,
- la densification de la préforme fibreuse par une matrice,
caractérisé en ce que, lors de l'enroulement de la texture fibreuse sur le mandrin, un voile comprenant un matériau fugace chargée avec des nanotubes de carbone est interposée entre les tours adjacents de la texture fibreuse, le matériau fugace étant chimiquement compatible avec les fibres et la matrice de la pièce en matériau composite et en ce que le matériau fugace est éliminé avant ou pendant la densification de la préforme fibreuse.

En interposant un voile de matériau fugace chargée de nanotubes de carbone entre les tours adjacents de la texture fibreuse, il est possible de renforcer la liaison entre les tours adjacents sans recourir à une couture ou un aiguilletage par exemple. En effet, à l'issue de la fabrication de la pièce en matériau composite, des nanotubes de carbone sont présents aux interfaces entre les tours adjacents du renfort fibreux de la pièce, ce qui renforce la résistance au délaminage du renfort dans ces zones. Selon une caractéristique du procédé de l'invention, la densification de la préforme fibreuse comprend l'imprégnation de la préforme avec une résine et la transformation de la résine en matrice par traitement thermique, le voile comprenant un matériau fugace chargé avec des nanotubes de carbone étant une couche d'un matériau fusible chargée avec des nanotubes de carbone, le matériau fusible présentant une température de fusion inférieure à la température de traitement de la résine. Le matériau fusible peut être ainsi éliminé lors de la montée en température pour le traitement de transformation de la résine en matrice et libérer ainsi les nanotubes de carbone qui vont se mélanger à la résine présente aux interfaces entre les tours adjacents de texture fibreuse. Le matériau fusible peut être un matériau thermoplastique présentant une température de fusion inférieure à 150°C. Selon une autre caractéristique du procédé de l'invention, les nanotubes de carbone sont des nanotubes de carbone multi-feuillets ayant sensiblement un diamètre de 10 nm et une longueur de 2 µm et/ou des nanotubes de carbone simple-feuillet ayant sensiblement un diamètre de 2 nm et une longueur de 5 µm.

### Brève description des dessins

[Fig. 1] La figure 1 est une vue en perspective et en coupe partielle d'un moteur aéronautique équipé d'un carter de soufflante en matériau composite conformément à un mode de réalisation de l'invention,
[Fig. 2] La figure 2 est une vue en coupe selon le plan II-II du carter de la figure 1, [Fig. 3] La figure 3 est une vue schématique en perspective d'un métier à tisser montrant le tissage d'une texture fibreuse utilisée pour la formation du renfort fibreux du carter des figures 1 et 2,
[Fig. 4] La figure 4 est une vue en perspective montrant la mise en forme d'une texture fibreuse et d'un voile de matériau thermoplastique chargée de nanotubes de carbone destinées à former le renfort du carter de soufflante des figures 1 et 2,
[Fig. 5] La figure 5 est une vue schématique montrant l'enroulement simultané de la structure fibreuse et du voile de matériau thermoplastique chargée de nanotubes de carbone de la figure 4,
[Fig. 6] La figure 6 est une vue en coupe montrant le profil de la préforme fibreuse obtenue après enroulement de la structure fibreuse et du voile de matériau thermoplastique chargée de nanotubes de carbone des figures 4 et 5,
[Fig. 7] La figure 7 est une vue schématique montrant un outillage permettant de densifier avec une matrice la préforme fibreuse de la figure 6.

### Description des modes de réalisation

L'invention s'applique d'une manière générale à toute pièce de révolution en matériau composite dont le renfort est formé à partir d'une bande tissée 3D enroulée sur plusieurs tours.

L'invention sera décrite ci-après dans le cadre de son application à un carter de soufflante de moteur aéronautique à turbine à gaz.

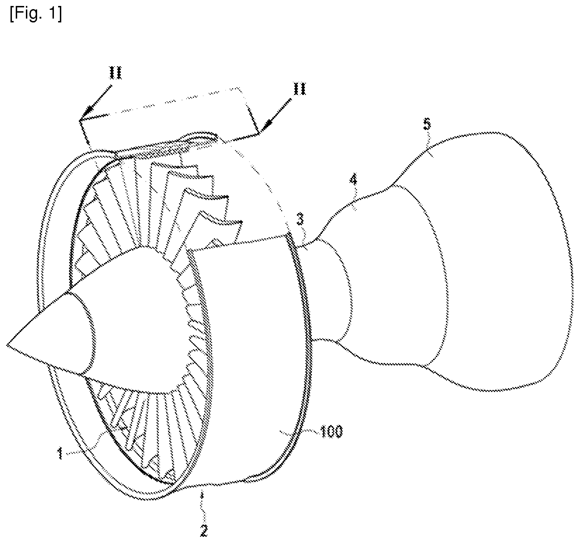

Un tel moteur, comme montré très schématiquement par la figure 1 comprend, de l'amont vers l'aval dans le sens de l'écoulement de flux gazeux, une soufflante 1 disposée en entrée du moteur, un compresseur 2, une chambre de combustion 3, une turbine haute-pression 4 et une turbine basse pression 5.

Le moteur est logé à l'intérieur d'un carter comprenant plusieurs parties correspondant à différents éléments du moteur. Ainsi, la soufflante 1 est entourée par un carter de soufflante 100.

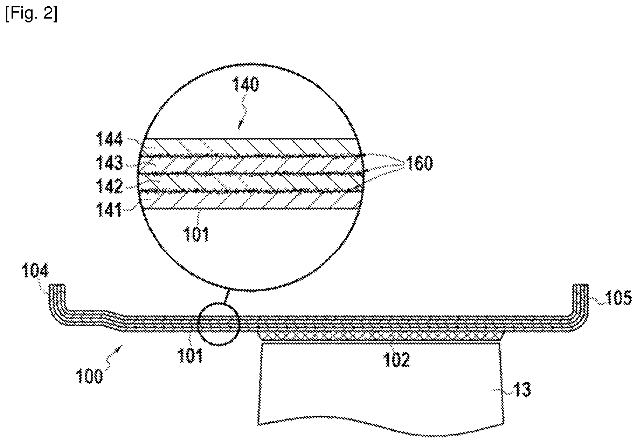

La figure 2 montre un profil de carter de soufflante 100 en matériau composite tel qu'il peut être obtenu par un procédé selon l'invention. La surface interne 101 du carter définit la veine d'entrée d'air. Elle peut être munie d'une couche de revêtement abradable 102 au droit de la trajectoire des sommets d'aubes de la soufflante, une aube 13 étant partiellement montrée de façon très schématique. Le revêtement abradable est donc disposé sur une partie seulement de la longueur (en direction axiale) du carter. Un revêtement de traitement acoustique (non représenté) peut en outre être disposé sur la surface interne 101 notamment en amont du revêtement abradable 102.

Le carter 100 peut être muni de brides externes 104, 105 à ses extrémités amont et aval afin de permettre son montage et sa liaison avec d'autres éléments.

Le carter 100 est réalisé en matériau composite à renfort fibreux densifié par une matrice. Le renfort est en fibres par exemple de carbone, verre, aramide ou céramique et la matrice est en polymère, par exemple époxyde, bismaléimide ou polyimide, en carbone ou en céramique.

Le renfort fibreux est formé par enroulement sur un mandrin d'une texture fibreuse réalisée par tissage tridimensionnel avec épaisseur évolutive, le mandrin ayant un profil correspondant à celui du carter à réaliser. Avantageusement, le renfort fibreux constitue une préforme fibreuse tubulaire complète du carter 100 formant une seule pièce avec des parties de renfort correspondant aux brides 104, 105.

Conformément à l'invention, le renfort fibreux du carter 100 est constitué d'une pluralité de tours superposées 141 à 144 d'une texture fibreuse 140 sous forme d'une bande présentant un tissage tridimensionnel ou multicouche (sur la figure 2 les tours 141 à 144 sont densifiées par une matrice). En outre, une couche de nanotubes de carbone 160 est présente à l'interface entre deux tours adjacents de la texture fibreuse. Dans l'exemple décrit ici, des nanotubes de carbone 160 sont présents à l'interface entre les tours 141 à 144 de la texture fibreuse 140.

La liaison à l'interface entre deux tours adjacents est ainsi renforcée par la présence des nanotubes de carbone.

On explique maintenant un procédé de fabrication du carter de soufflante 100.

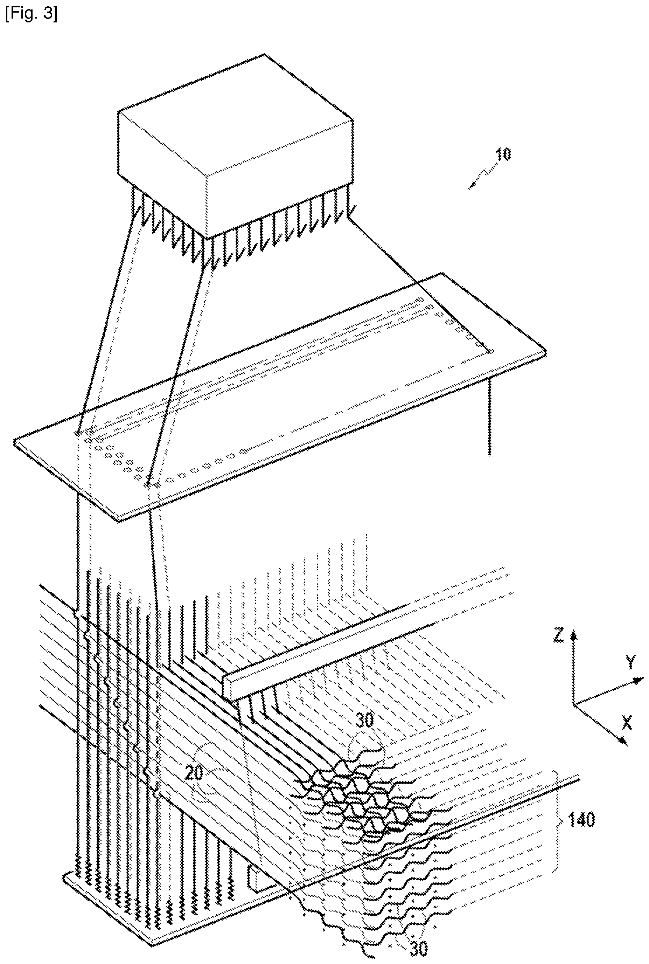

Comme représentée sur la figure 3, une texture fibreuse 140 est réalisée de façon connue par tissage au moyen d'un métier à tisser de type jacquard 10 sur lequel on a disposé un faisceau de fils de chaîne ou torons 20 en une pluralité de couches, les fils de chaîne étant liés par des fils ou torons de trame 30. La texture fibreuse est réalisée par tissage tridimensionnel. Par « tissage tridimensionnel » ou « tissage 3D », on entend ici un mode de tissage par lequel certains au moins des fils de trame lient des fils de chaîne sur plusieurs couches de fils de chaîne ou inversement. Un exemple de tissage tridimensionnel est le tissage dit à armure « interlock ». Par tissage « interlock », on entend ici une armure de tissage dans laquelle chaque couche de fils de chaîne lie plusieurs couches de fils de trame avec tous les fils d'une même colonne de chaîne ayant le même mouvement dans le plan de l'armure.

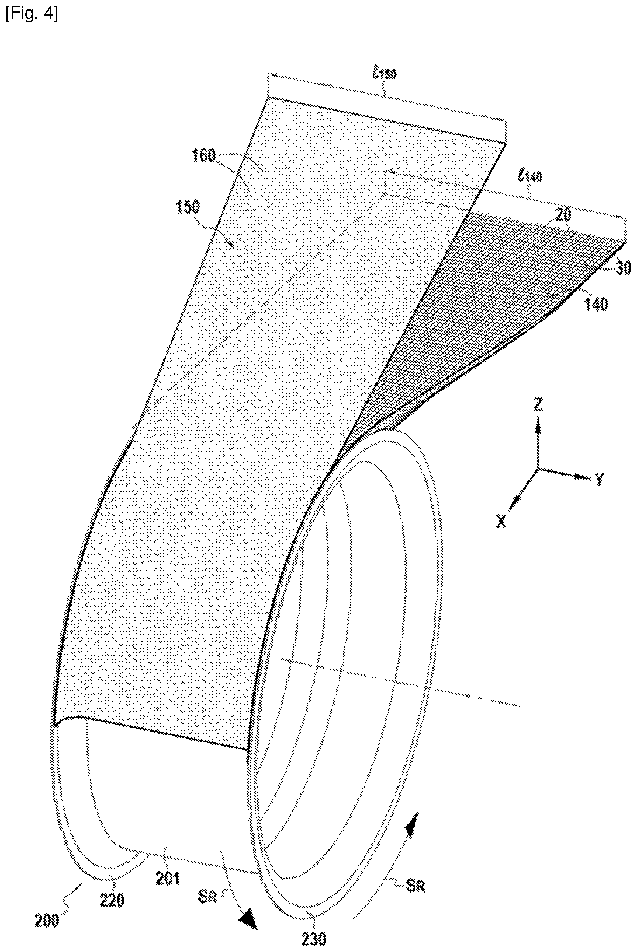

Comme illustrée sur les figures 3 et 4, la texture fibreuse 140 présente une forme de bande qui s'étend en longueur dans une direction X correspondant à la direction de défilement des fils ou torons de chaîne 20 et en largeur ou transversalement dans une direction Y correspondant à la direction des fils ou torons de trame 30.

La structure fibreuse peut être notamment tissée à partir de fils de fibres de carbone, de céramique telle que du carbure de silicium, de verre, ou encore d'aramide.

Comme illustré sur la figure 4, une préforme fibreuse est formée par enroulement de la texture fibreuse 140 réalisée par tissage tridimensionnel sur un mandrin 200 entraîné en rotation suivant un sens SR, le mandrin ayant un profil correspondant à celui du carter à réaliser.

Conformément à l'invention, un voile 150 comprenant des nanotubes de carbone 160 est enroulée avec la texture fibreuse 140, le voile 150 étant positionnée au-dessus du premier tour 141 de la texture 140 enroulée sur le mandrin 200 de manière à intercaler un tour de voile 150 entre deux tours adjacents de texture fibreuse 140. Dans l'exemple décrit ici, le voile 150 présente une largeur 1150 égale à la largeur l140 de la texture fibreuse 140. Selon une variante, le voile 150 peut présenter une largeur inférieure à la largeur de la texture fibreuse 140, le voile 150 étant placée entre les tours adjacents de la texture fibreuse à une position déterminée en fonction des besoins de renforcement à l'interface entre les tours.

Avantageusement, la préforme fibreuse constitue un renfort fibreux tubulaire complet du carter 100 formant une seule pièce avec une portion de surépaisseur correspondant à la zone de rétention du carter.

A cet effet, le mandrin 200 présente une surface externe 201 dont le profil correspond à la surface interne du carter à réaliser. Par son enroulement sur le mandrin 200, la texture fibreuse 140 épouse le profil de celui-ci. Le mandrin 200 comporte également deux flasques 220 et 230 pour former des parties de préforme fibreuse correspondant aux brides 104 et 105 du carter 100.

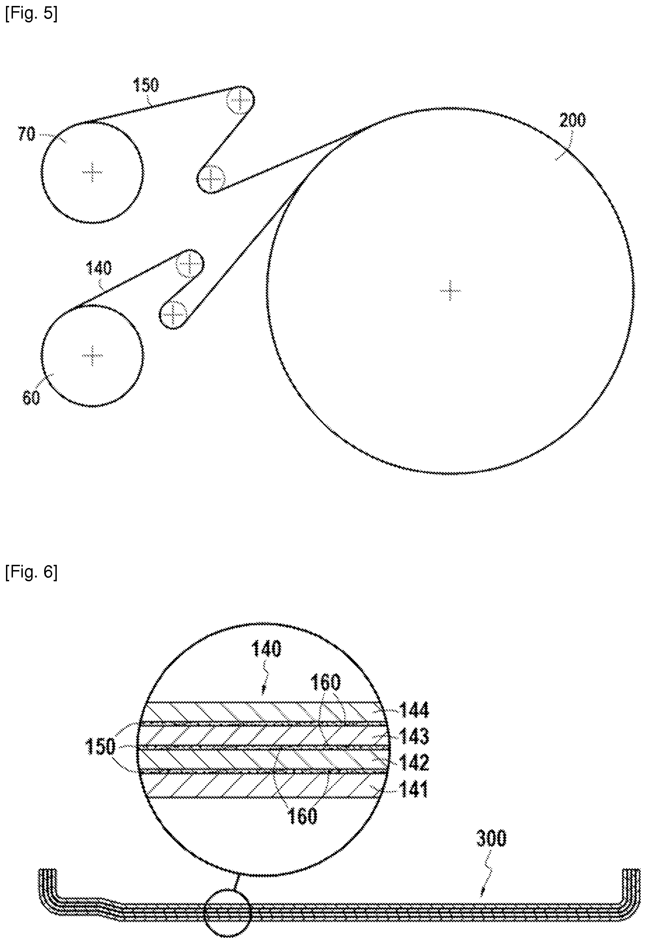

Lors de la formation de la préforme fibreuse par enroulement sur le mandrin 200, la texture fibreuse 140 et le voile 150 chargée de nanotubes de carbone 160 sont appelées depuis des tambours 60 et 70 respectivement sur lesquels elles sont stockées comme illustrées sur la figure 5.

La figure 6 montre une vue en coupe de la préforme fibreuse 300 obtenue après enroulement de la texture fibreuse 140 et du voile 150 en plusieurs tours sur le mandrin 200. Le nombre de tours ou spires est fonction de l'épaisseur désirée et de l'épaisseur de la texture fibreuse. Il est de préférence au moins égal à 2. Dans l'exemple décrit ici, la préforme 300 comprend 4 tours 141 à 144 de texture fibreuse 140 et 3 tours 151 à 153 de voile 150 interposés respectivement entre les tours adjacentes 141 et 142, 142 et 143, et 143 et 144.

On obtient une préforme fibreuse 300 avec une interface formée par l'interposition des tours 151 à 153 du voile 150 chargée de nanotubes de carbone 160 entre les couches superposées 141 à 144 de la texture fibreuse 140.

Le voile 150 correspond à une couche d'un matériau fugace, c'est-à-dire qui peut être éliminé en cours de fabrication, chargée avec des nanotubes de carbone 160. Dans l'exemple décrit, le matériau fugace correspond à un matériau fusible, le voile 150 correspondant à un voile de matériau thermoplastique dont la température de fusion est inférieure à la température de polymérisation de la résine destinée à former la matrice comme décrit ci-après. Le matériau thermoplastique peut par exemple être un co-polyamide PA6/PA66 ayant une température de fusion de 106°C. D'autres matériaux thermoplastiques ayant ure température de fusion typiquement comprise entre 85°C et 148 °c peuvent également être utilisés pour former le voile.

Le voile qui correspond à un type particulier de tissu non-tissé de fibres thermoplastiques peut être réalisé par la technique connue de fusion-soufflage, le voile étant en outre chargé avec des nanotubes de carbone.

Le voile ainsi réalisé se présente sous la forme d'une strate de fibres thermoplastiques enchevêtrées de 30 à 70 µm de diamètre. L'avantage de ce type de voile est l'absence de liant chimique car les fibres sont jointes entre elles thermiquement. Le grammage du voile non-tissé est compris entre 15 g/m2 et 100g/m2.

Les nanotubes de carbone utilisés ici peuvent être des nanotubes de carbone simple-feuillet (SWNT ou SWCNT, pour « *Single-Walled (Carbon) Nanotubes* ») et/ou multi-feuillets (MWNT ou MWCNT, pour « *Multi-Walled (Carbon) Nanotubes* »)*.* Les nanotubes de carbone multi-feuillets ont généralement un diamètre de 10 nm environ et une longueur de 2 µm environ. Les nanotubes de carbone simple-feuillet ont généralement un diamètre de 2 nm environ et une longueur de 5 µm environ.

Le taux de charge de nanotubes de carbone dans le voile peut être par exemple d'environ 3,5% en masse.

Un voile peut par exemple être fabriqué à partir de granulés (masterbatch) dans lesquels sont présents de nanotubes de carbone. Ces granulés vont former le voile par extrusion de filaments qui s'enchevêtrent en sortie de filière.

On procède ensuite à la densification de la préforme fibreuse 300 par une matrice.

La densification de la préforme fibreuse consiste à combler le vide de la préforme, dans tout ou partie du volume de celle-ci, par le matériau constitutif de la matrice.

La matrice peut être obtenue de façon connue en soi suivant le procédé par voie liquide.

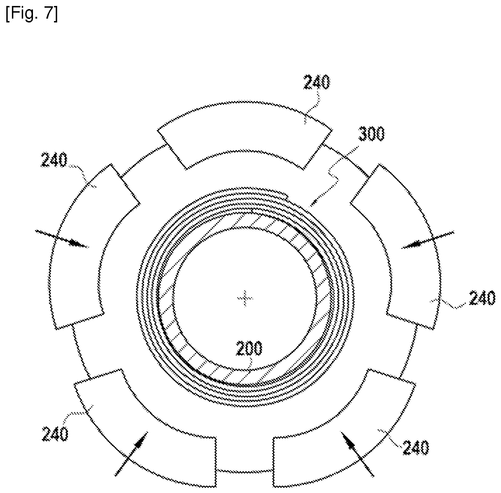

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme fibreuse est placée dans un moule pouvant être fermé de manière étanche avec un logement ayant la forme de la pièce finale moulée. Comme illustré sur la figure 7, la préforme fibreuse 300 est ici placée entre une pluralité de secteurs 240 formant contre-moule et le mandrin 200 formant support, ces éléments présentant respectivement la forme extérieure et la forme intérieure du carter à réaliser. Ensuite, on injecte le précurseur liquide de matrice, par exemple une résine, dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances vendue.

Selon un aspect de l'invention, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme du carter à réaliser. Une résine thermodurcissable est injectée dans l'espace interne délimité entre le mandrin 200 et les contres-moules 240. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Lors de la mise en température pour le traitement thermique de transformation de la résine en matrice, le matériau fusible de la couche 150 fond. Les nanotubes de carbone 160 se retrouvent alors en contact avec la résine et forment une liaison de renforcement à l'interface entre les tours adjacents de la texture fibreuse (figure 2).

Après l'injection et la transformation de la résine en matrice, la pièce est démoulée. Au final, la pièce est détourée pour enlever l'excès de résine et les chanfreins sont usinés pour obtenir le carter 100 illustré en figures 1 et 2.

Le matériau fugace de la couche comprenant les nanotubes de carbone enroulée avec la texture fibreuse peut être un matériau différent d'un matériau fusible. La couche peut être par exemple être réalisée avec un matériau apte à se dissoudre en présence d'un solvant tel que de l'eau. Tout autre matériau chimiquement compatible avec les fibres et la matrice de la pièce en matériau composite et pouvant être éliminé avant ou pendant la densification de la préforme peut être utilisé pour porter les nanotubes de carbone.

## Revendications

1. Procédé de fabrication d'une pièce de révolution en matériau composite comprenant:
- la réalisation par tissage tridimensionnel ou multicouche d'une texture fibreuse (140) sous forme d'une bande,
- l'enroulement de la texture fibreuse (140) sur plusieurs tours superposés (141, 142, 143, 144) sur un mandrin (200) de profil correspondant à celui de la pièce à fabriquer de manière à former une préforme fibreuse (300),
- la densification de la préforme fibreuse (300) par une matrice,
**caractérisé en ce que**, lors de l'enroulement de la texture fibreuse (140) sur le mandrin (200), un voile (150) comprenant un matériau fugace chargé avec des nanotubes de carbone (160) est interposé entre les tours adjacents (141, 142, 143, 144) de la texture fibreuse, le matériau fugace étant chimiquement compatible avec les fibres et la matrice de la pièce en matériau composite et **en ce que** le matériau fugace est éliminé avant ou pendant la densification de la préforme fibreuse.

2. Procédé selon la revendication 1, dans lequel la densification de la préforme fibreuse (300) comprend l'imprégnation de la préforme avec une résine et la transformation de la résine en matrice par traitement thermique, et dans lequel le voile (150) comprenant un matériau fugace chargé avec des nanotubes de carbone (160) est une couche d'un matériau fusible chargée avec des nanotubes de carbone, le matériau fusible présentant une température de fusion inférieure à la température de traitement de la résine.

3. Procédé selon la revendication 2, dans lequel le matériau fusible est un matériau thermoplastique présentant une température de fusion inférieure à 150°C.

4. Procédé selon la revendication 2 ou 3, dans lequel les nanotubes de carbone sont des nanotubes de carbone multi-feuillets ayant sensiblement un diamètre de 10 nm et une longueur de 2 µm.

5. Procédé selon l'une quelconque des revendications 2 ou 3, dans lequel les nanotubes de carbone sont des nanotubes de carbone simple-feuillet ayant sensiblement un diamètre de 2 nm et une longueur de 5 µm.

## Patentansprüche

1. Verfahren zur Herstellung eines Rotationsbauteils aus Verbundmaterial, umfassend:
- das Herstellen mittels dreidimensionalem oder mehrlagigem Weben einer Fasertextur (140) in Form eines Bandes,
- das Aufwickeln der Fasertextur (140) in mehreren übereinanderliegenden Windungen (141, 142, 143, 144) auf einem Dorn (200) mit einem dem herzustellenden Bauteil entsprechenden Profil, um eine faserige Vorform (300) zu bilden,
- das Verdichten der faserigen Vorform (300) durch eine Matrix,
**dadurch gekennzeichnet, dass** beim Aufwickeln der Fasertextur (140) auf den Dorn (200) ein Schleier (150), der ein mit Kohlenstoffnanoröhren (160) beladenes flüchtiges Material umfasst, zwischen den benachbarten Windungen (141, 142, 143, 144) der Fasertextur eingefügt wird, wobei das flüchtige Material chemisch mit den Fasern und der Matrix des Verbundbauteilmaterials kompatibel ist und wobei das flüchtige Material vor oder während der Verdichtung der faserigen Vorform entfernt wird.

2. Verfahren nach Anspruch 1, bei dem die Verdichtung der faserigen Vorform (300) das Imprägnieren der Vorform mit einem Harz und das Umwandeln des Harzes in eine Matrix durch Wärmebehandlung umfasst und bei dem der Schleier (150), der ein mit Kohlenstoffnanoröhren (160) beladenes flüchtiges Material umfasst, eine Schicht eines mit Kohlenstoffnanoröhren beladenen schmelzbaren Materials ist, wobei das schmelzbare Material eine unter der Behandlungstemperatur des Harzes liegende Schmelztemperatur aufweist.

3. Verfahren nach Anspruch 2, bei dem das schmelzbare flüchtige Material ein thermoplastisches Material ist, das eine unter 150 °C liegende Schmelztemperatur aufweist.

4. Verfahren nach Anspruch 2 oder 3, bei dem die Kohlenstoffnanoröhren mehrwandige Kohlenstoffnanoröhren sind, die im Wesentlichen einen Durchmesser von 10 nm und eine Länge von 2 µm aufweisen.

5. Verfahren nach einem der Ansprüche 2 oder 3, bei dem die Kohlenstoffnanoröhren einwandige Kohlenstoffnanoröhren sind, die im Wesentlichen einen Durchmesser von 2 nm und eine Länge von 5 µm aufweisen.

## Claims

1. A process for manufacturing a cylindrical composite component comprising:
- producing a fibrous texture (140) in the form of a strip by three-dimensional or multi-layer weaving,
- winding the fibrous texture (140) on several superimposed lathes (141, 142, 143, 144) on a mandrel (200) with a profile corresponding to that of the component to be manufactured so as to form a fibrous preform (300),
- densifying the fibrous preform (300) with a matrix,
**characterized in that**, when the fibrous texture (140) is wound on the mandrel (200), a web (150) comprising a fugitive material filled with carbon nanotubes (160) is interposed between the adjacent turns (141, 142, 143, 144) of the fibrous texture, the fugitive material being chemically compatible with the fibers and the matrix of the composite material component and **in that** the fugitive material is removed before or during densifying the fibrous preform.

2. The process as claimed in claim 1, wherein densifying the fibrous preform (300) comprises impregnating the preform with a resin and converting the resin into a matrix by heat treatment, and wherein the web (150) comprising a fugitive material filled with carbon nanotubes (160) is a layer of a fusible material filled with carbon nanotubes, the fusible material having a melting temperature lower than the treatment temperature of the resin.

3. The process as claimed in claim 2, wherein the fusible material is a thermoplastic having a melting temperature below 150°C.

4. The process as claimed in claim 2 or 3, wherein the carbon nanotubes are multi-walled carbon nanotubes having a diameter of 10 nm and a length of 2 µm.

5. The process as claimed in claim 2 or 3, wherein the carbon nanotubes are single-walled carbon nanotubes having substantially a diameter of 2 nm and a length of 5 µm.
